# EUROPEAN PATENT SPECIFICATION

(11) **EP 1 250 213 B1**
(45) Date of publication and mention of the grant of the patent: **28.07.2004**
(21) Application number: 00993590.9
(22) Date of filing: 21.12.2000
(51) Int. Cl.: B23Q 7/00, B23Q 39/02, B23P 23/02

(54) **MACHINE TOOL AND METHOD FOR WORKING ELONGATED ELEMENTS, IN PARTICULAR METALLIC PROFILED ELEMENTS**
WERKZEUGMASCHINE UND VERFAHREN ZUR BEARBEITUNG VON LÄNGLICHEN ELEMENTEN, INSBESONDERE METALLISCHEN PROFILELEMENTEN
MACHINE-OUTIL ET PROCEDE D'USINAGE D'ELEMENTS ALLONGES, EN PARTICULIER DES ELEMENTS PROFILES METALLIQUES

(30) Priority: 27.12.1999 CH 238299
(43) Date of publication of application: 23.10.2002
(73) Proprietor: Emmegi S.P.A., 41010 Limidi di Soliera (IT)
(72) Inventor: BELLUCCI, Marco, I-41100 Modena (IT)
(74) Representative: Crugnola, Pietro
(86) International application number: PCT/EP2000/013079
(87) International publication number: WO 2001/047662

(56) References cited:
- EP-A- 0 175 672
- WO-A-92/12915
- WO-A-98/01257
- CH-A- 634 766
- DE-A- 3 823 635
- DE-A- 3 928 246
- DE-A- 4 113 629
- PATENT ABSTRACTS OF JAPAN vol. 1995, no. 03, 28 April 1995 (1995-04-28) -& JP 06 335838 A (NIPPEI TOYAMA CORP;OTHERS: 01), 6 December 1994 (1994-12-06)

## Description

The invention relates to a machine and a method for working elongated elements, particularly metallic profiled elements, or profiled elements made of plastic or compound materials, used, for example, for manufacturing door or window frames, or structural elements in general, acccording to the preamble of claim 1 and 10 respectively.

Prior art comprises multi-spindles machine-tools, in which a profiled element to be worked is kept in a working position on a machine bed by means of plurality of fastening clamps which may be positioned in transversal sections arranged one next the other in a longitudinal direction on said machine bed. A plurality of operating units is slidably coupled in longitudinal direction on the machine bed, each one bearing tool means to carry out pre-established workings on a profiled element. At one end of the machine bed, a storage unit for profiled elements to be worked is arranged, which is shaped in such a way as to allow the profiled elements to be advanced one at a time to reach an insertion position on the machine bed in which the profiled element to be positioned on the machine bed is aligned with the clamps of the machine bed and can be positioned onto the machine bed, being axially pushed by means of a push-bar which pushes the rear end of the profiled element. At the other end of the machine bed, an extractor is arranged suitable for withdrawing a worked profiled element and longitudinally dragging the profiled element along the machine bed until the element is introduced into a storage unit for the worked profiled elements.

Therefore, both positioning and extracting of the profiled elements take place by sliding the profiled elements along sliding elements on the machine bed, which may cause damage to the profiled elements due to bumps between the profiled elements and said sliding elements, or due to the presence of shavings which may be accidentally interposed between the walls of the profiled element and the surfaces along which said profiled element has to slide to be brought in the working position, or extracted from the working position.

The risk of damaging the profiled element is particularly high if the profiled element has been superficially treated by painting, oxidation or similar treatments.

The abstract of the Japanese patent application n. 06335838 discloses a clamp device for clamping a long-sized work according to the preamble of claim 1. A working machine for working the work on the clamp device is provided. A movable holding device for holding the work is associated to the working machine. A temporary placing base for temporarily placing an un-worked work or a worked work is arranged opposite to the clamp device. A first rack for housing the un-worked work and a second rack for housing the worked work are provided. The operation of the holding device is controlled by a control circuit, and the work is automatically carried in and out between the racks by the holding device.

DE 4113629 discloses an automatic drilling and milling machine having a long bed with cylindrical guideways on which a plurality of machining units can be arranged. A fixed leadscrew, supported at each end of the bed, is arranged between the guideways. Each machining unit has a recirculating ball nut supporting the leadscrew and rotatably driven to allow independent positioning of the unit along the bed.

Work rests are fixed at each end of the bed, said work rests having rotatably driven clamps shaped to accept workpieces such as door stops with variously profiled sections.

WO 98/01257 discloses a method for making profile pieces comprising the steps of feeding a profile into a work station, clamping the profile in the work station, and cutting it into a profile piece and a profile reminder. The profile piece is repositioned in the work station for further work by operably connecting it to the profile remainder while both the profile piece and the profile remainder are clamped, and moving the profile remainder.

DE 3928246 discloses a method for cutting a long bar of material into precisely dimensioned length on a machine comprising two cutting stations. According to said method, a circumferential groove with a V-shaped profile is cut in the bar at the first station. The bar is then moved axially by gripper until it abuts against a stop. This movement of the bar brings the grove in line with the second tool which then cuts right through the bar at the required distance from the newly cut end face.

Furthermore, according to prior art, to carry out on a profiled element either cutting workings to divide a single semi-worked piece into portions, or workings on the side surfaces and on the end surfaces, or heads, of each portion, in general the profiled element has to be positioned on at least two different machines equipped for this purpose.

An object of the invention is to improve the known working systems for profiled elements.

A further object is to reduce the risk of damages to the profiled elements, particularly when they are positioned on the machine bed and/or extracted from said machine bed.

A still further object is to increase the productivity of the profiled element working systems.

In a first aspect of the present invention, an apparatus for working semi-worked pieces, in particular metallic profiled elements, is provided according to claim 1.

In a second aspect of the present invention, there is provided a method for working semi-worked pieces, in particular metallic profiled elements, according to claim 10.

In this way, the risk of damage to the profiled element caused by grazing along the sliding surfaces of the machine bed, or parts thereof, is substantially prevented.

Furthermore, the productivity is also considerably increased, in particular when a plurality of profiled element portions axially and consecutively arranged along the machine bed are worked: in fact, after carrying out the working on one portion, said portion may be removed from the working position while the working of another portion has already begun.

The invention will be better understood and carried out with reference to the description related to the attached drawings, which show an exemplifying and not restrictive embodiment thereof, in which:
Figures 1 is a perspective view of a machine tool according to the present invention as seen from one end of the machine bed;
Figure 2 is a top perspective view of the machine of Figure 1;
Figure 3 is an elevation view of the machine of Figure 1;
Figure 4 is a section taken along plane IV-IV of Figure 2;
Figure 5 is a section taken along plane V-V of Figure 2;
Figure 6 is a section taken along the plane VI-VI of Figure 2;
Figure 7 is enlarged and broken perspective view, of the machine of Figure 1, at the beginning of a work cycle;
Figure 8 is an enlarged and broken perspective view of the machine of Figure 1, after a semi-worked piece has been positioned on the clamps of the machine bed, i.e. in the working position;
Figure 9 is an enlarged and broken perspective view of the machine of Figure 1, after the head of the semi-worked piece has been flattened;
Figure 10 is an enlarged and broken perspective view of the machine of Figure 1, during cutting of the semi-worked piece to separate a portion from said semi-worked piece;
Figure 11 is an enlarged and broken perspective view of the machine of Figure 1, after a space has been obtained between the portion separated and the remaining part of profiled element;
Figure 12 is an enlarged and broken-perspective view of the machine of Figure 1, during working of the end of the remaining part of profiled element;
Figure 13 is an enlarged and broken perspective view of the machine of Figure 1, during working of the end of the portion of profiled element;
Figure 14 is an enlarged and broken perspective view of the machine of Figure 1, during removing of the worked portion from the working position;
Figure 15 is a broken perspective view of a section of the machine of Figure 1 with a same cutting unit in three different operative positions;
Figure 16 is a broken top perspective view of a machine tool according to the present invention showing a variation of the cutting unit;
Figure 17 is a broken front perspective view of.the machine tool of Figure 16.

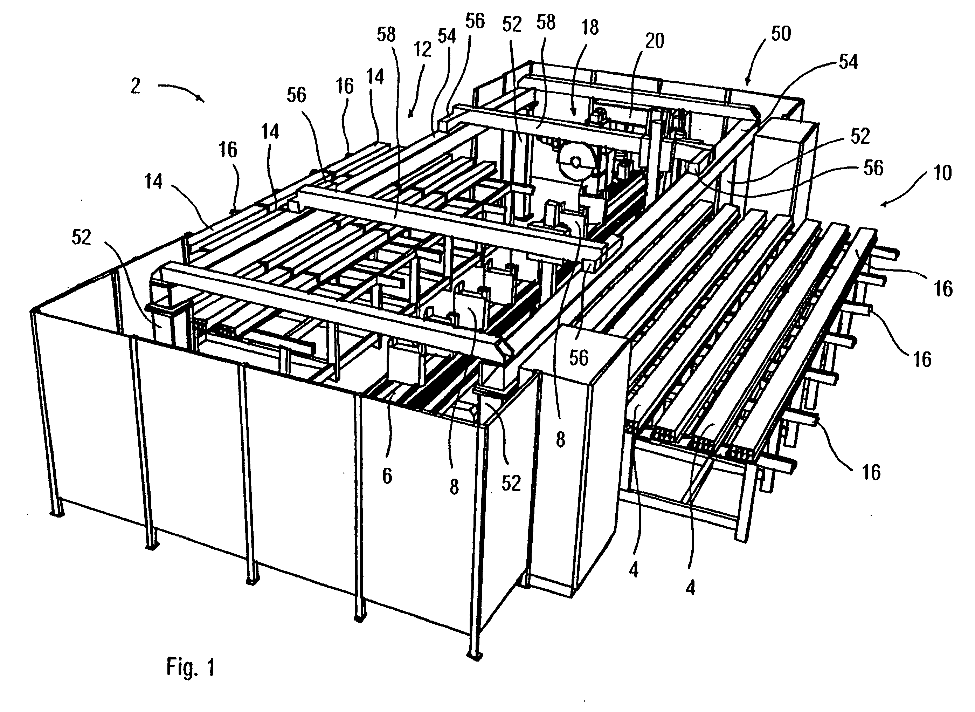

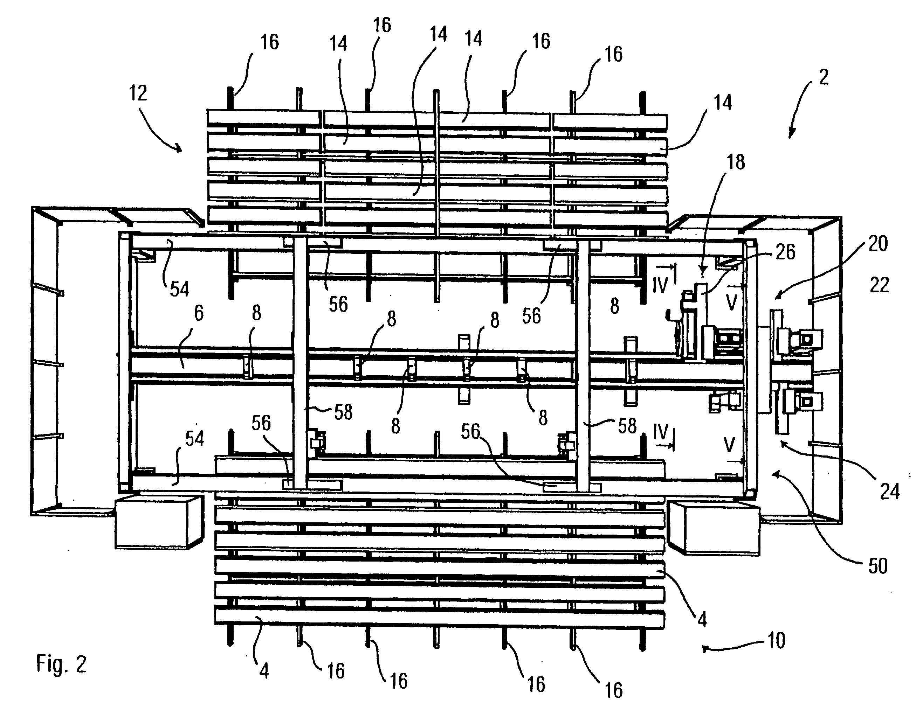

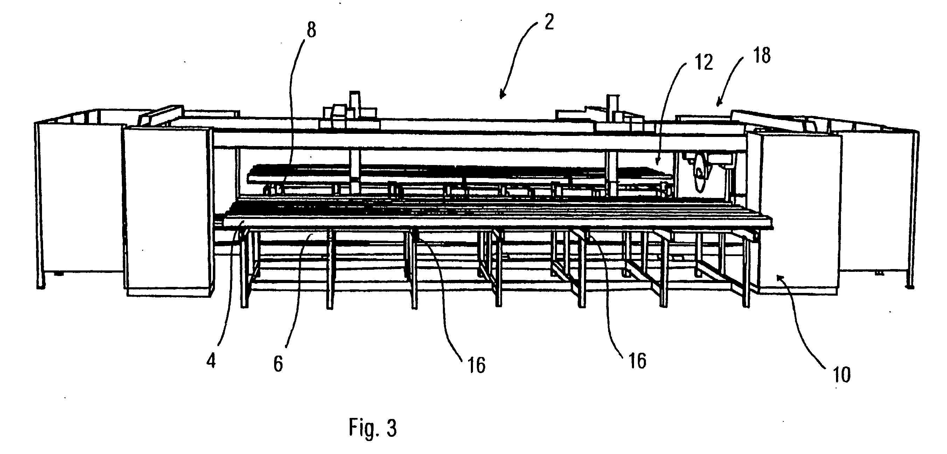

As shown in Figures 1 to 6, a machine tool 2 for working metallic profiled elements 4 comprises a base 6 on which a plurality of clamps 8 may be longitudinally positioned by means of positioning means which arranges each clamp 8 in such a way that said clamp does not cover a part of the profiled element 4 to be worked which will be subjected to mechanical working processes.

A storage unit 10 for semi-worked pieces 4 to be worked and a storage unit 12 for portions 14 of already worked semi-worked pieces are arranged parallel to the machine bed 6 and at opposite sides thereof. Both storage units 10 and 12 comprise a plurality of parallel belt conveyors and are arranged transversal to the machine bed 6.

A cutting group 18, a first operating unit 20, a second operating unit 22 and a third operating unit 24 are slidably coupled in a longitudinal direction to the machine bed 6.

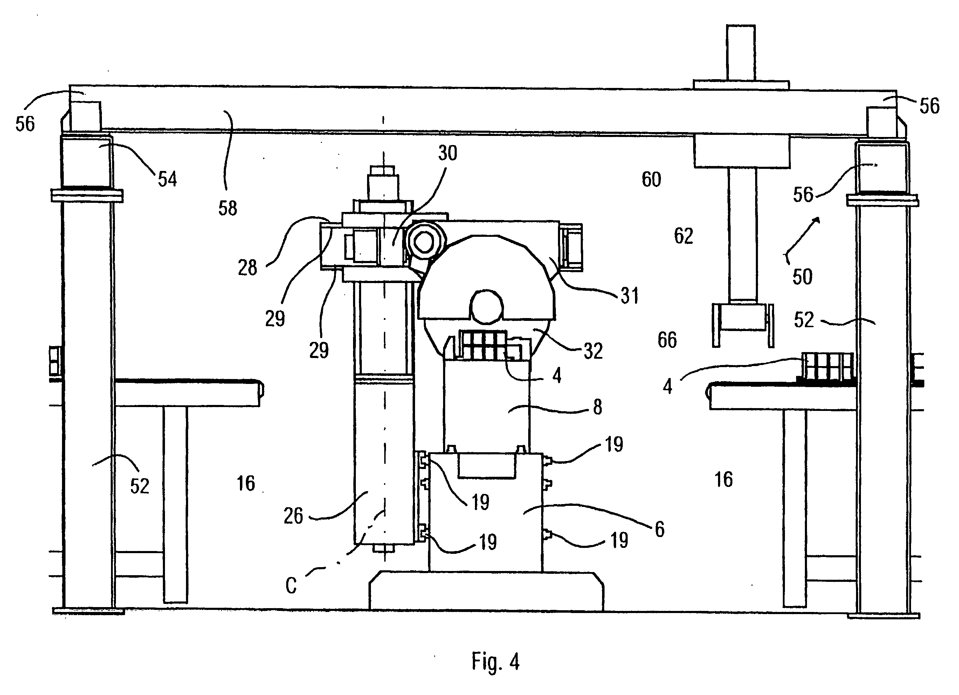

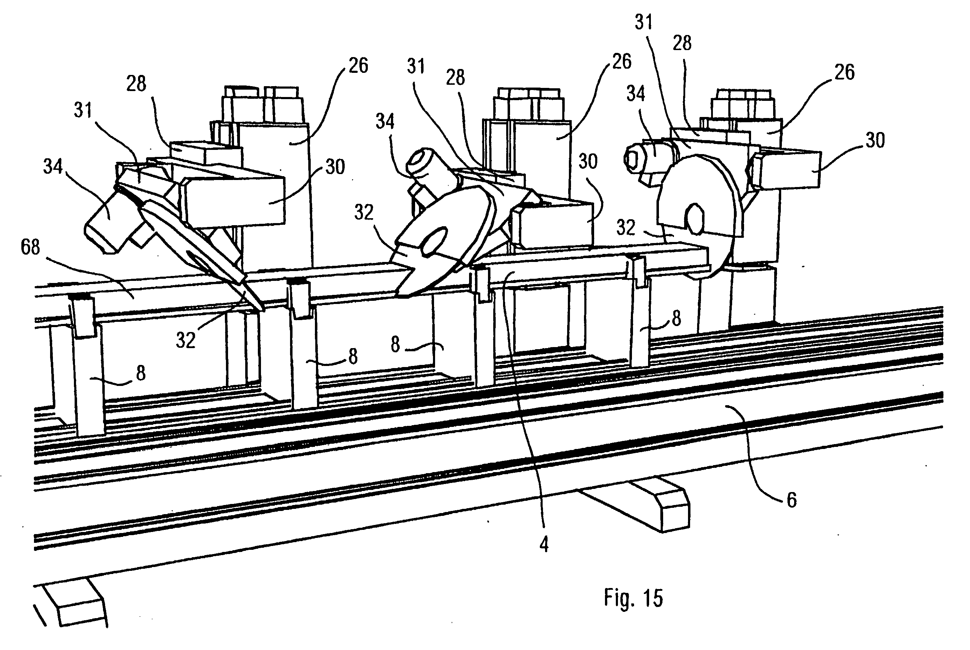

As shown in Figures 4 and 15, the cutting group 18 comprises an upright 26 rotatable around a vertical axis C and coupled at the bottom to longitudinal runners 19 of the machine bed 6, on the upright 26 being vertically movable a sliding block 28 to which a slide 30 horizontally slidable on sliding means 29 is slidably supported. A bar 31 rotatable around a horizontal axis is hinged to the slide 30, said bar 31 carrying a circular blade 32 driven to rotate around a median axis thereof by means of a motor 34. Therefore, the blade 32 may keep pre-established angular positions transversal to the machine bed 6, so as to be able of carrying out oblique anyway oriented cuts on the semi-worked piece 4 to be worked.

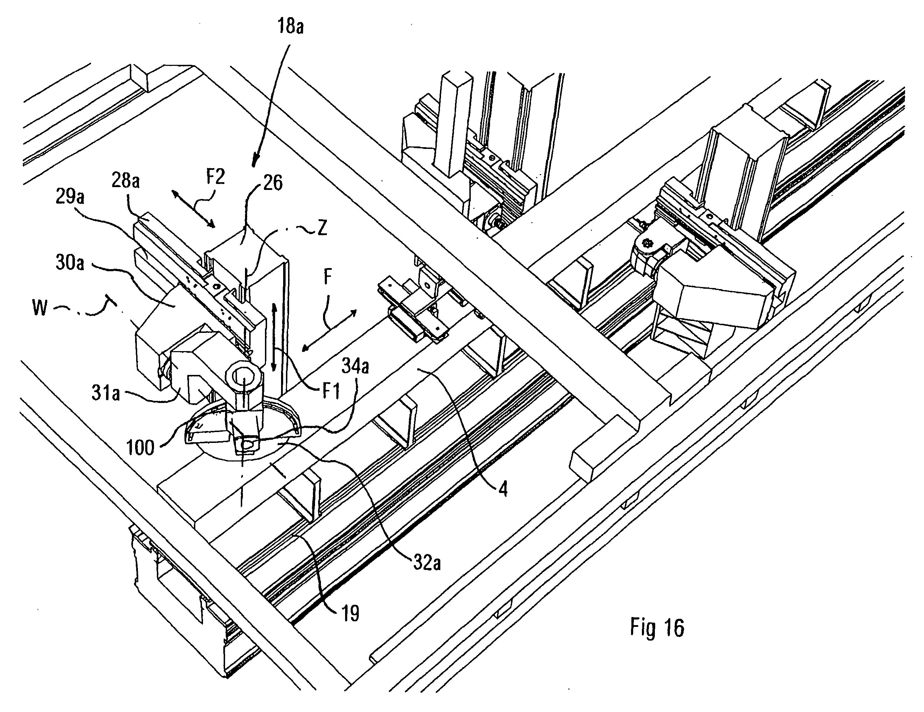

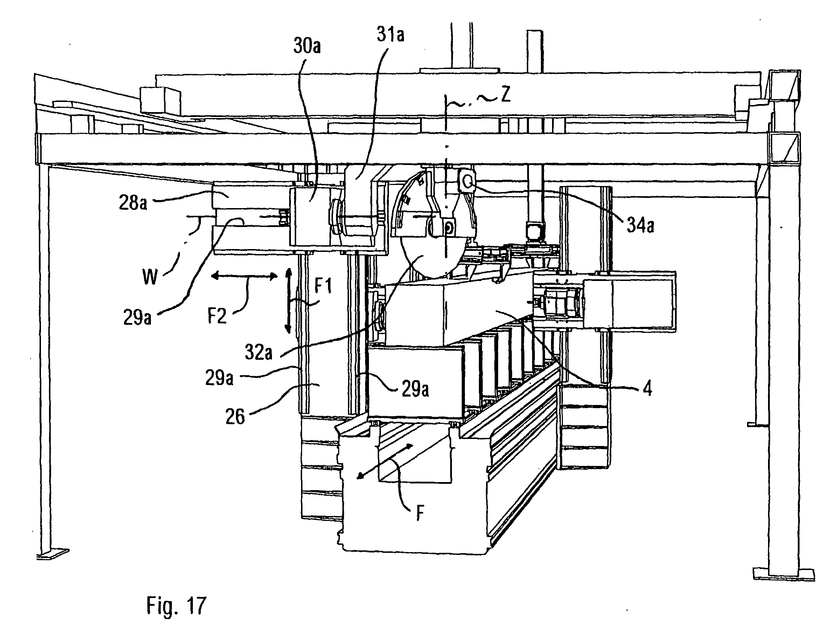

With reference to Figures 16 and 17, a further cutting unit 18a is shown obtained according to a variation and comprising an upright 26a coupled at the bottom to longitudinal runners 19 of the machine bed 6 so as to slide on said machine bed 6 in the direction shown by the arrow F. On the upright 26a a further sliding block 28a is vertically movable, as shown by the arrow F1. A further slide 30a is supported to said further sliding block 28a so as to be able to horizontally slide in the direction indicated by the arrow F2 on further sliding means 29a. A further bar 31a rotatable around a horizontal axis W is hinged to said further slide 30a to which a support element suitable for rotating around an axis Z perpendicular to the axis W is rotatably coupled. A further circular blade 32 driven to rotate around a median axis thereof by means of a relative motor 34a is coupled to said support element. In this way, the further blade 32 of the further cutting unit 18a is provided with an additional degree of freedom with respect to the blade 32 of the cutting unit 18, thus enabling the range of working processes which can be carried out on the profiled elements 4 to be further widened.

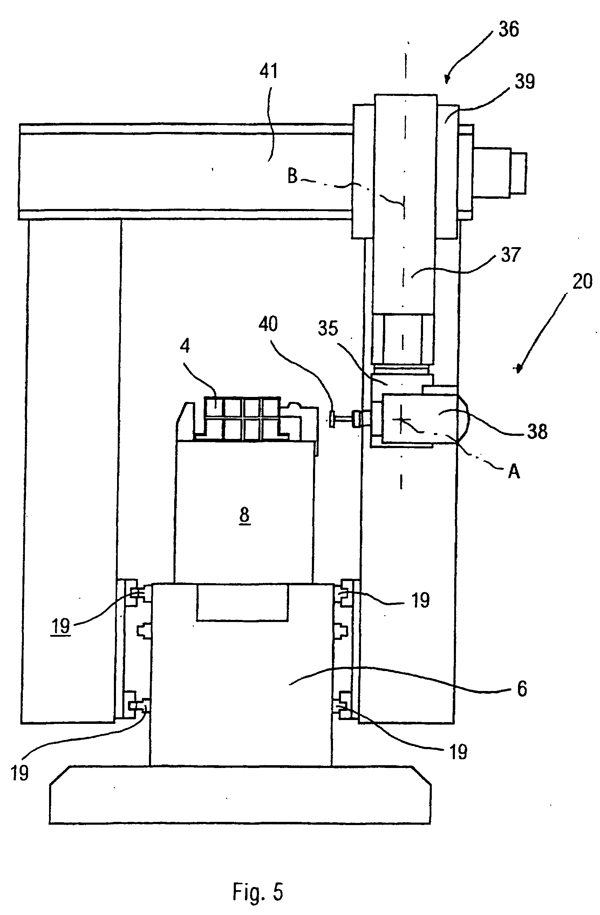

As shown in Figure 5, the first operating unit 20 comprises a portal-like structure 36 crossing the machine bed 6, said portal-like structure 36 slides along the runners 19 and is provided with a spindle 38 carrying tool means 40 to carry out mechanical workings on the profiled element 4 to be worked or on parts thereof. ,

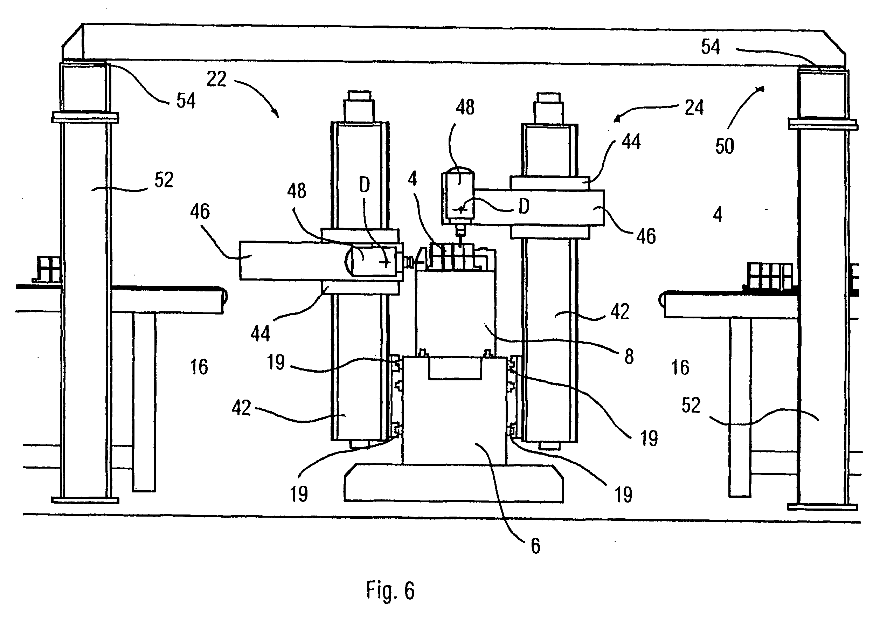

The spindle 38 is mounted on a support 35 so as to be angularly positionable around a horizontal axis A, the support 35 being mounted, so as to be angularly positionable around a vertical axis B, on a slide 37 vertically movable with respect to a trolley 39 sliding along a cross-bar body 41 of the portal-like structure 36. In this way, the tool means 40 may be so arranged as to easily work both the side surfaces of the semi-worked piece 4 being worked and the end surfaces - or 'heads' - of the semi-worked piece 4 or parts thereof, except the surface facing the machine bed 6 which is difficult to work. As shown in Figure 6, the second operating unit 22 and the third operating unit 24 have a symmetrical structure and are symmetrically arranged with respect to a longitudinal plane passing through the centre line of the machine bed 6.

Each of the operating units 22 and 24 comprises an upright body 42 slidably engaged to the runners 19, to which a vertically positionable slide body 44 is coupled; a respective arm 46 is coupled to said slide body 44 in such a way as to be able to slide horizontally in a transversal plane. Each respective arm 46 has an end near the machine bed 6 supporting a spindle unit 48 which may be angularly positioned with respect to a horizontal axis D.

Above the machine bed 6, the cutting unit 18 and the operating units 20, 22 and 24 a frame 50 supported by columns 52 is arranged, said frame 50 being provided with guiding tracks 54 extending parallelly to the machine bed 6 and on which the ends 56 of a pair of bridge structures 58 are longitudinally slidable, each of said bridge structures 58 supporting a trolley 60 longitudinally slidable along the guide tracks 54; to each trolley 60 a vertically movable rod 62 is coupled, the lower end thereof supporting respective pliers 64 having jaws 66 suitable for clamping the profiled element 4 to be worked, or the already worked portions 14.

The bridge structures 58 and the pliers 64 coupled thereto may be positioned on the profiled elements 4, remove the profiled elements 4 from the storage unit 10 for the semi-worked pieces to be worked and place the profiled elements 4 one at a time on the clamps 8, which lock them in a working position. When a profiled element 4, or a portion thereof, has been worked, the pliers 64 remove the profiled element from the working position and transfer it in the storage unit 12 for the already worked semi-worked pieces.

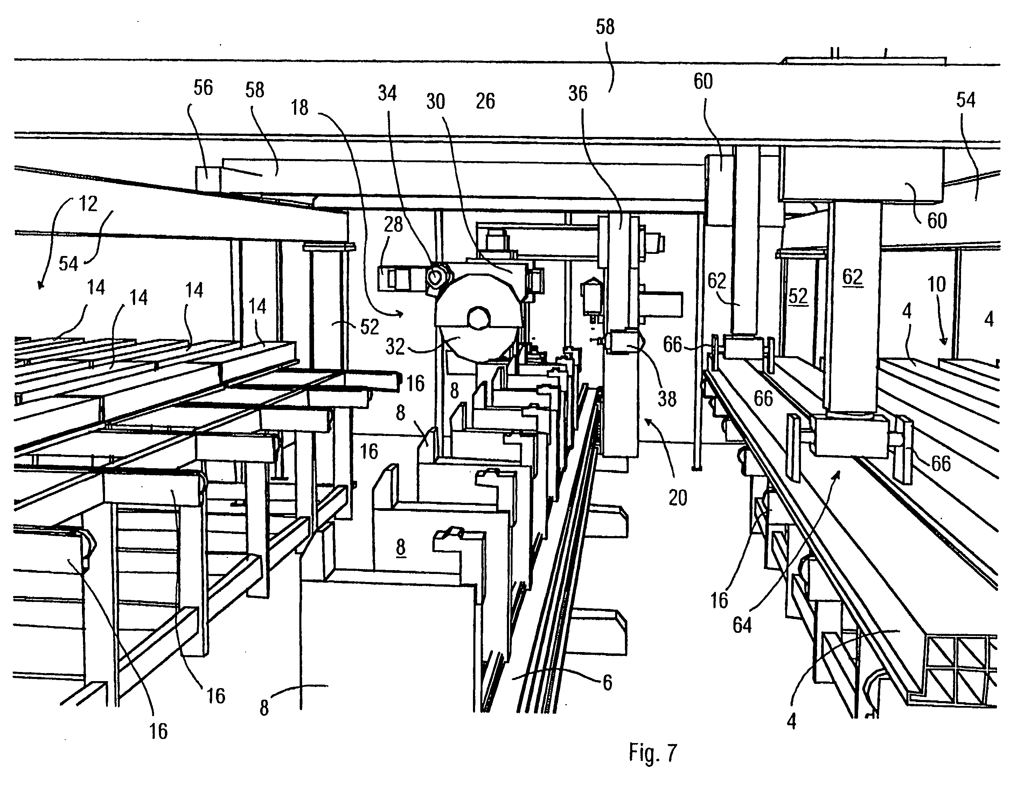

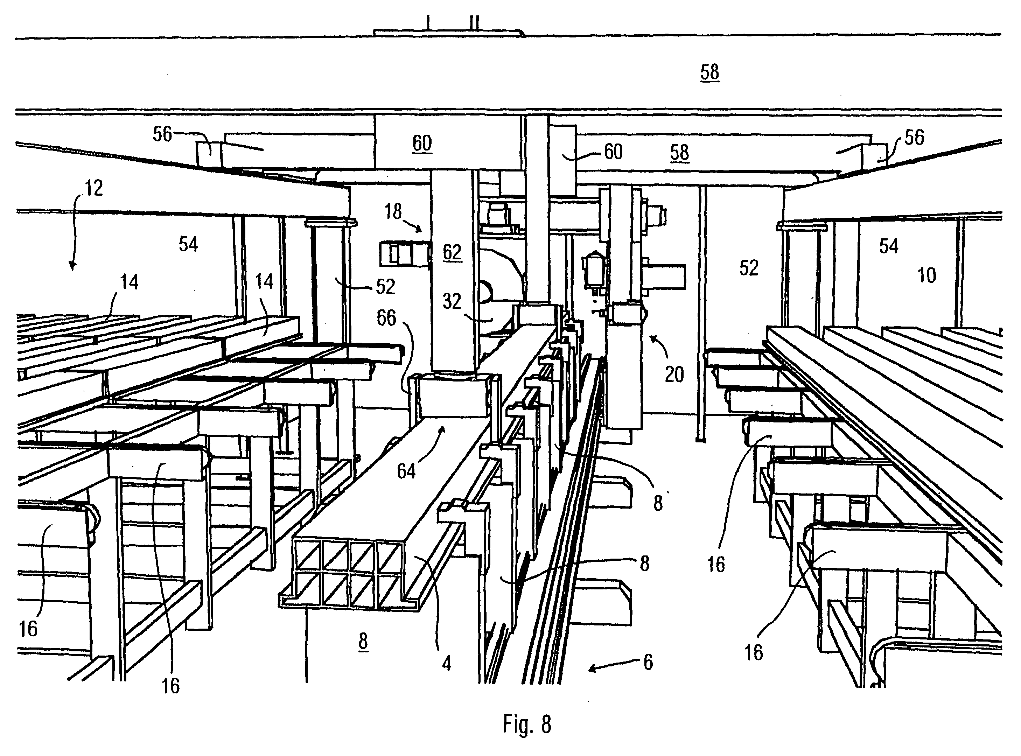

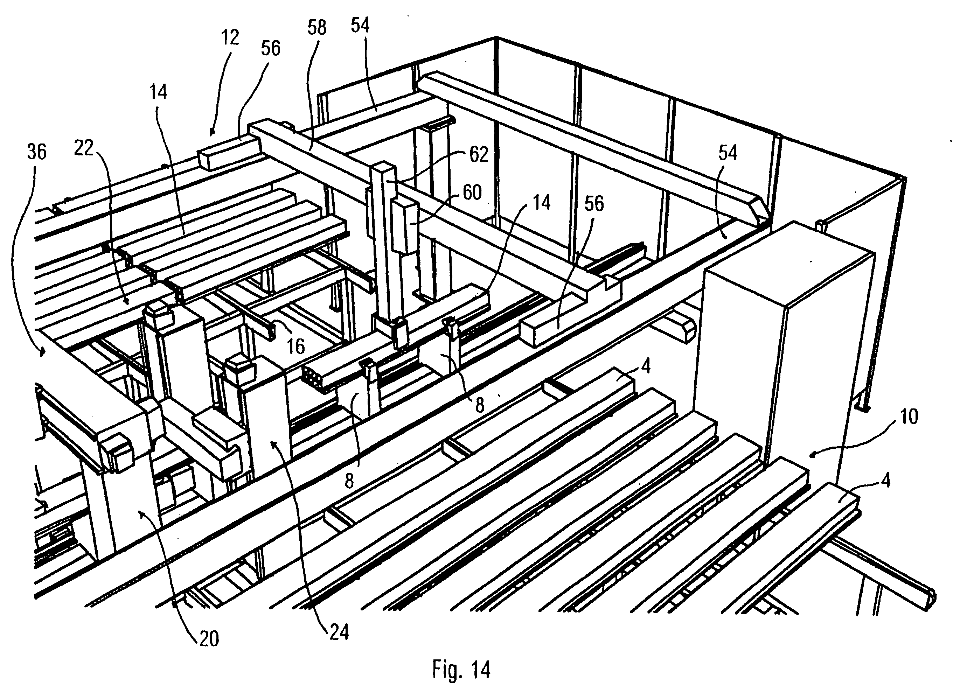

The machine works according to the operative sequence shown in Figures 7 to 14, and more precisely: with reference to Figure 7, the pliers 64 withdraw from the storage unit 10 for semi-worked pieces to be worked a profiled element 4 resting on the belts 16 and transfer the profiled element 4 to the working position onto the clamps 8 of the machine bed 6 which have been previously suitably so positioned as not to interfere with the working of the profiled element 4; the semi-worked piece 4 is lifted from the belts 16 and positioned on the clamps 8 by being lowered until it rests on the clamps 8: in this way the risk of the profiled element 4 being scratched, or damaged while being transported in the working position is prevented. Subsequently, (Figure 8), the clamps 8 are closed to lock the profiled element 4 in the working position and, while the pliers 64 are still holding the profiled element 4, the bridge structures 58 are translated in a longitudinal direction, dragging the clamps 8 and the profiled element 4 locked thereby on the machine bed 6 to an operative position for the beginning of the working cycle; it has to be noted that the profiled elements 4 are transferred without sliding on the clamps. Alternatively, the clamps 8 and the profiled element locked thereby may be longitudinally moved by means of another suitable actuator, such as for example, the cutting unit 18, or the operating units 20, 22 and 24.

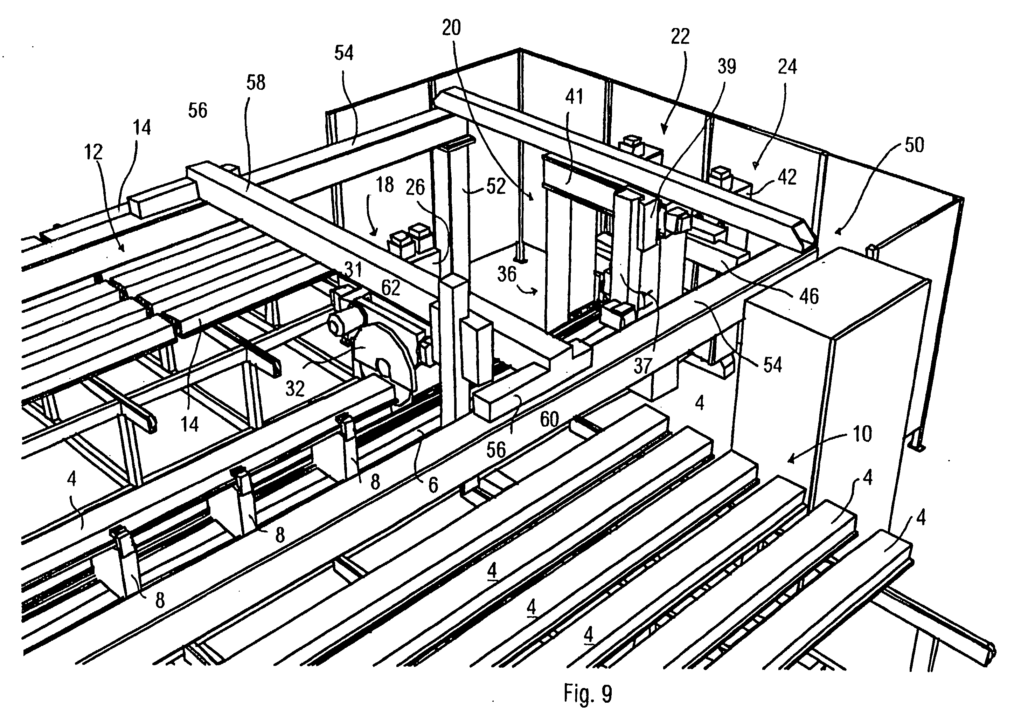

After the profiled element 4 has been brought to the working position corresponding to the beginning of the working cycle, as shown in Figure 9, the cutting unit 18 is caused to slide, by means of suitable driving means, on the machine bed 6 and the circular blade 32 is moved along a transversal plane to carry out flattening of the profiled element 4. Subsequently, the cutting unit 18 is moved to a section of the profiled element 4 in which a further transversal cut has to be carried out for separating a portion 68 of profiled element to be worked from the profiled element 4. The portion 68, still held by the clamps, is moved along the machine bed 6 in a direction opposite to the direction along which the profiled element 4 had been moved to reach the working position for the beginning of the work cycle. The portion 68 is moved by means of a suitable actuator, such as, for example, the first operating unit 20, to obtain a space between the portion 68 and the remaining part of the profiled element 4.

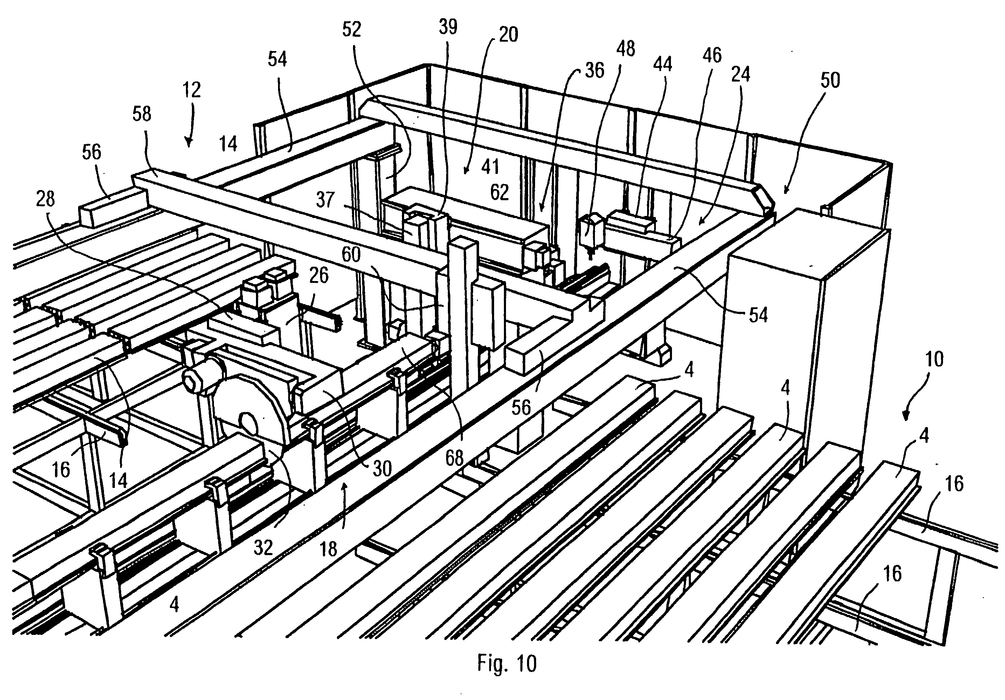

In the meantime, the cutting unit 18 is moved to another section of the profiled element 4 in which another transversal cut has to be made, as shown in Figure 10.

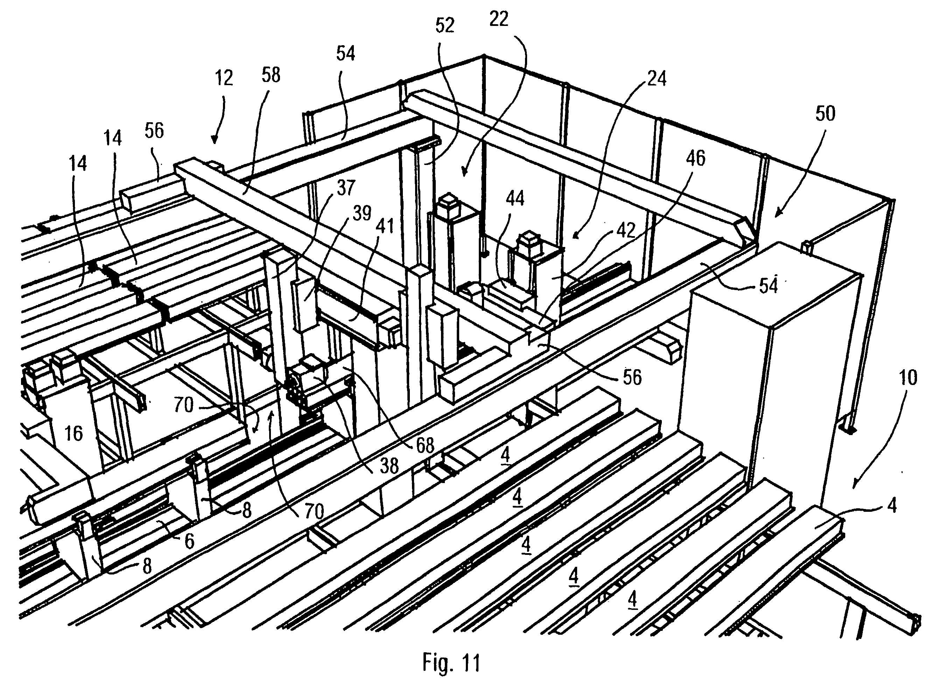

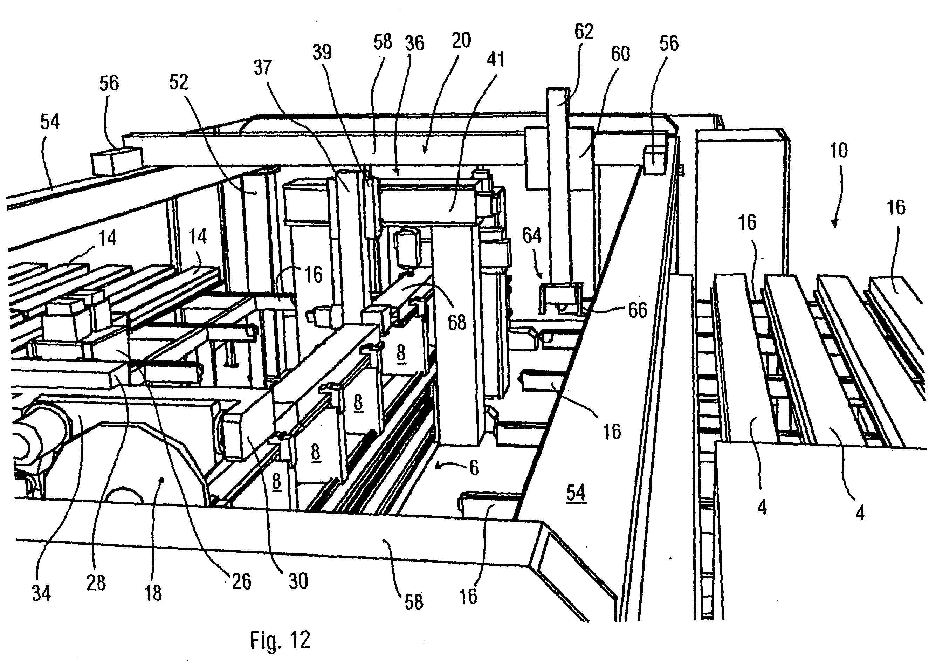

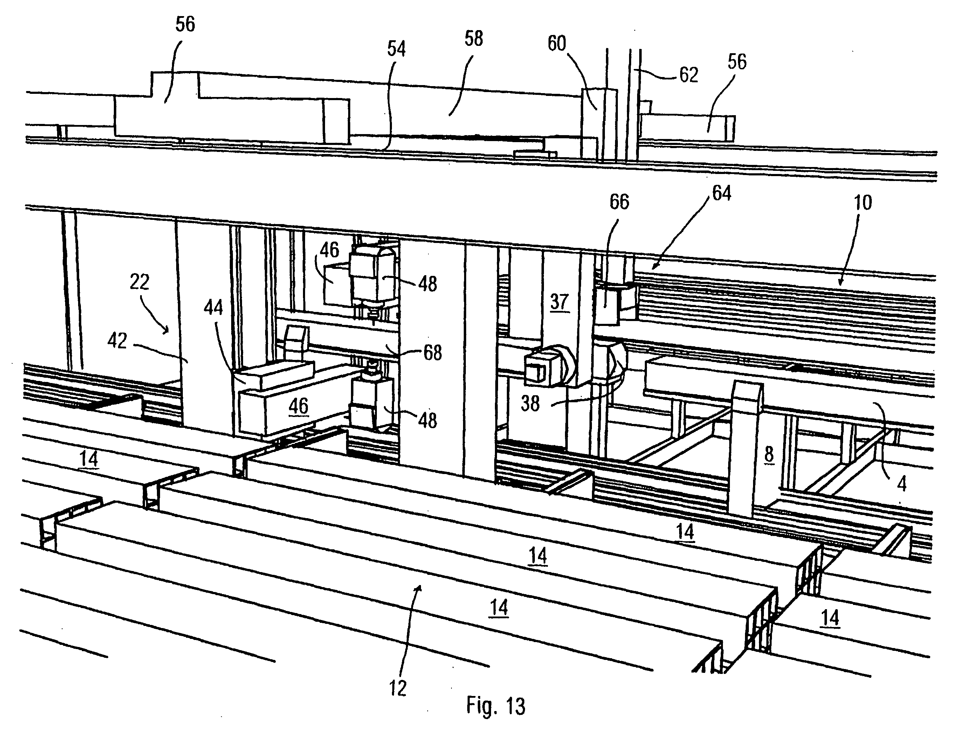

As shown in Figure 11, the portion 68 and the remaining part of the profiled element 4 facing said portion 68 are worked by means of the first operating unit 20, which may, for example, carry out flattening of the end surfaces 70; furthermore, at the same time, the operating units 22 and 24 may work the side surfaces of the portion 68, including the surface facing the machine bed 6, to obtain a completely worked profiled element 14, as shown in Figures 12 and 13.

The worked profiled element 14, after being released from the clamps 8, is then removed from the working position by the pliers 64, which lift the profiled element 4 from the clamps 8 to prevent it from grazing the clamps, and transferred into the storage unit 12 for the worked profiled elements.

## Claims

1. Apparatus for working elongated semi-worked pieces, in particular metallic profiled elements, comprising machine bed supporting means (6) extending in a longitudinal direction and arranged for supporting a semi-worked piece to be worked in a working position, storing means (10, 12) arranged for delivering semi-worked pieces (4) to be worked and/or to receive already worked semi-worked pieces (14), moving means (58, 60, 62, 64, 66) arranged for moving said semi-worked pieces (4, 14) towards and/or away from said working position, said moving means (58, 60, 62, 64, 66) being movable in a plane transversal to said longitudinal direction for delivering the semi-worked piece (4) to be worked in the working position and/or removing the already worked semi-worked piece (14) from the working position, **characterized in that** said storing means (10, 12) comprises first storage means (10) arranged to store said semi-worked pieces (4) to be worked and extending on one side of said machine bed supporting means (6) and second storage means (12) arranged to store said already worked semi-worked pieces (14) and extending on a further side of said machine bed supporting means (6) opposite to said one side.

2. Apparatus according to claim 1, wherein said first storage means (10) and said second storage means (12) comprise a plurality of parallel belt conveyors (16) transversally arranged with respect to said machine bed supporting means (6).

3. Apparatus according to claim 1, or 2, wherein said moving means (58, 60, 62, 64, 66) extends substantially above said machine bed means (6).

4. Apparatus according to any one of the preceding claims, wherein said moving means (58, 60, 62, 64, 66) comprises bridge means (58) slidably supported in a longitudinal direction along guiding tracks (54) parallel to and arranged above said machine bed means (6).

5. Apparatus according to claim 4, wherein said bridge means (58) supports pliers means (64, 66) via trolley means (60) slidably coupled to said bridge means (58).

6. Apparatus according to claim 5, wherein said pliers means (64, 66) may be vertically moved with respect to said bridge means (58).

7. Apparatus according to any one of the preceding claims, and further comprising a cutting unit (18, 18a) supported on runners (19) of said machine bed means (6) so as to be longitudinally positionable with respect to said machine bed means (6), said cutting unit (18; 18a) being arranged for cutting said semi-worked piece (4) along a transversal plane.

8. Apparatus according to any one of the preceding claims, and further comprising at least one operating unit (20, 22, 24) supported on runners (19) of said machine bed means (6) so as to be longitudinally positionable with respect to said machine bed means (6), said at least one operating unit (20, 22, 24) being arranged for carrying out workings on surfaces of said semi-worked piece (4).

9. Apparatus according to claim 8 as appended to claim 7, wherein said at least one operating unit (20, 22, 24) is arranged between said cutting unit (18; 18a) and the end of said machine bed means (6)

10. Method for working elongated semi-worked pieces, in particular metallic profiled element, comprising supporting a semi-worked piece (4) to be worked extending substantially in a longitudinal direction in a working position, storing said semi-worked pieces (4) to be worked and/or already worked semi-worked pieces (14), moving said semi-worked pieces (4, 14) towards and/or away from said working position, said moving substantially comprising moving said semi-worked pieces (4, 14) transversally to said longitudinal direction for substantially preventing said semi-worked pieces (4, 14) from being moved along said longitudinal direction at least immediately before said semi-worked pieces reach said working position and/or at least immediately after said semi-worked pieces have been removed from said working position, **characterized in that** said moving further comprises loading said semi-worked pieces (4) to be worked from first storage means (10) extending on one side of said working position and unloading said already worked semi-worked pieces (14) into second storage means (12) extending on a further side of said working position opposite to said one side.

11. Method according to claim 10, wherein said moving takes place above said machine bed means (6).

12. Method according to claim 10, or 11, wherein said moving comprises moving said profiled elements (4, 14) in a vertical plane.

13. Method according to any one of claims 10 to 12, wherein said storing comprises placing said semi-worked pieces (4, 14) parallel to said machine bed means (6) on a side thereof.

14. Method according to claim 13, wherein said storing comprises placing said semi-worked pieces (4) to be worked and said already worked semi-worked pieces (14).

15. Method according to any one of claims 10 to 14, and further comprising cutting said semi-worked piece (4) to separate from said semi-worked piece a portion (68) of semi-worked piece separated from the remaining part of said semi-worked piece (4) and obtaining a space between said portion and said remaining part.

16. Method according to claim 15, wherein said obtaining comprises moving said portion (68) away from said remaining part of semi-worked piece (4) in a longitudinal direction.

17. Method according to claim 15, or 16, wherein, after said obtaining, inserting at least one operating unit (20, 22, 24) into said space is provided, so that it is possible to work ends of said portion (68) and of said remaining part of said semi-worked piece (4) to be worked.

## Patentansprüche

1. Vorrichtung zur Bearbeitung von langgestreckten Halbzeugen, insbesondere von metallischen profilierten Elementen, mit Maschinenbett-Aufnahmemitteln (6), die sich in einer Längsrichtung erstrecken und zur Aufnahme eines zu bearbeitenden Halbzeuges in einer Bearbeitungsposition angeordnet sind, mit Speichermitteln (10, 12), die zur Zuführung von Halbzeugen (4) zur Bearbeitung und/oder zur Aufnahme von bereits bearbeiteten Halbzeugen (14) ausgebildet ist, mit Bewegungsmitteln (58, 60, 62, 64, 66), die zur Bewegung der Halbzeuge (4, 14) zu und/oder aus der Arbeitsposition weg angeordnet sind, wobei die Bewegungsmittel (58, 60, 62, 64, 66) in einer zu der Längsrichtung zur Zuführung der Halbzeuge (4) zur Bearbeitung in der Arbeitsposition und/oder zum Entfernen der bereits bearbeiteten Halbzeuge (14) aus der Arbeitsposition senkrechten Ebene beweglich sind, **dadurch gekennzeichnet, dass** das Speichermittel (10, 12) ein erstes Speichermittel (10) aufweist, das zur Speicherung der zu bearbeitenden Halbzeuge (4) ausgebildet ist und sich auf einer Seite des Maschinenbett-Stützmittels (6) erstreckt, sowie ein zweites Speichermittel (12) aufweist, das zur Speicherung der bereits bearbeiteten Halbzeuge (14) ausgebildet ist und sich auf einer anderen Seite des Maschinenbett-Stützmittels (6) gegenüber der einen Seite erstreckt.

2. Vorrichtung nach Anspruch 1, bei der das erste Speichermittel (10) und das zweite Speichermittel (12) eine Mehrzahl von parallelen Gurtförderern (16) aufweisen, die quer in Bezug auf das Maschinenbett-Aufnahmemittel (6) angeordnet sind.

3. Vorrichtung nach Anspruch 1 oder 2, bei der das Bewegungsmittel (58, 60, 62, 64, 66) sich im Wesentlichen oberhalb des Maschinenbett-Mittels (6) erstreckt.

4. Vorrichtung nach irgendeinem der vorhergehenden Ansprüche, bei der das Bewegungsmittel (58, 60, 62, 64, 66) ein Brückenmittel (58) aufweist, das in einer Längsrichtung entlang von Führungsschienen (54) parallel zu und oberhalb des Maschinenbett-Mittels (6) verschieblich aufgenommen ist.

5. Vorrichtung nach Anspruch 4, bei der das Brückenmittel (58) ein Zangenmittel (64, 66) trägt, das mittels eines Verfahrmittels (60) verschieblich mit dem Brückenmittel (58) gekoppelt ist.

6. Vorrichtung nach Anspruch 5, bei dem das Zangenmittel (64, 66) in Bezug auf das Brückenmittel (58) vertikal bewegt werden kann.

7. Vorrichtung nach irgendeinem der vorhergehenden Ansprüche, ferner aufweisend eine Schneideinheit (18, 18a), die auf Läufern (19) des Maschinenbett-Mittels (6) derart gehalten ist, dass es in Längsrichtung in Bezug auf das Maschinenbett-Mittel (6) positionierbar ist, wobei die Schneideeinheit (18, 18a) zum Schneiden des Halbzeuges (4) entlang einer Querebene ausgebildet ist.

8. Vorrichtung nach irgendeinem der vorhergehenden Ansprüche, ferner umfassend wenigstens eine Arbeitseinheit (20, 22, 24), die auf Läufern (19) des Maschinenbett-Mittels (6) derart aufgenommen ist, dass sie in Bezug auf das Maschinenbett-Mittel (6) in Längsrichtung positionierbar ist, wobei die wenigstens eine Arbeitseinheit (20, 22, 24) zum Ausführen von Arbeiten auf den Oberflächen des Halbzeuges (4) ausgebildet ist.

9. Vorrichtung nach Anspruch 8, soweit dieser von Anspruch 7 abhängt, bei der wenigstens die eine Arbeitseinheit (20, 22, 24) zwischen der Schneideinheit (18; 18a) und dem Ende des Maschinenbett-Mittels (6) angeordnet ist.

10. Verfahren zum Bearbeiten von langgestreckten Halbzeugen, insbesondere von metallischen profilierten Elementen, umfassend das Aufnehmen eines zu bearbeitenden Halbzeuges (4) in einer Arbeitsposition, die sich im Wesentlichen in einer Längsrichtung erstreckt, das Speichern von zu bearbeitenden Halbzeugen (4) und/oder von bereits bearbeiteten Halbzeugen (14), das Bewegen der Halbzeuge (4, 14) zu und/oder aus der Arbeitsposition weg, wobei das Bewegen im Wesentlichen das Bewegen der Halbzeuge (4, 14) quer zu der Längsrichtung umfasst, um im Wesentlichen zu verhindern, dass die Halbzeuge (4, 14) entlang der Längsrichtung bewegt werden, wenigstens unmittelbar, bevor die Halbzeuge die Bearbeitungsposition erreichen und/oder wenigstens unmittelbar nachdem die Halbzeuge aus der Arbeitsposition entfernt wurden, **dadurch gekennzeichnet, dass** das Bewegen ferner das Laden zu bearbeitenden Halbzeuge (4) von dem ersten Speichermittel (10) umfasst, das sich auf einer Seite der Arbeitsposition erstreckt, sowie das Entladen von bereits bearbeiteten Halbzeugen (14) in ein zweites Speichermittel (12) das sich auf einer anderen Seite der Arbeitsposition gegenüber der einen Seite erstreckt.

11. Verfahren nach Anspruch 10, bei dem die Bewegung oberhalb des Maschinenbett-Mittels (6) erfolgt.

12. Verfahren nach Anspruch 10 oder 11, bei dem das Bewegen das Bewegen der profilierten Elemente (4, 14) in einer vertikalen Ebene umfasst.

13. Verfahren nach irgendeinem der Ansprüche 10 bis 12, bei dem das Speichern das Platzieren der Halbzeuge (4, 14) parallel zu dem Maschinenbett-Mittel (6) auf einer Seite desselben umfasst.

14. verfahren nach Anspruch 13, bei dem das Speichern das Platzieren der zu bearbeitenden Halbzeuge (4) und der bereits bearbeiteten Halbzeuge (14) umfasst.

15. Verfahren nach irgendeinem der Ansprüche 10 bis 14, das ferner das Schneiden der Halbzeuge (4) umfasst, um von dem Halbzeug einen Bereich (68) des Halbzeugs von dem verbleibenden Teil des Halbzeugs (4) abzutrennen und um einen Zwischenraum zwischen dem Bereich und dem verbleibenden Teil zu erhalten.

16. Verfahren nach Anspruch 15, bei dem das Erhalten das Bewegen des Bereiches (68) von dem verbleibenden Teil des Halbzeuges (4) weg in einer Längsrichtung umfasst.

17. Verfahren nach Anspruch 15 oder 16, bei dem nach dem Erhalten bei der wenigstens einen Arbeitseinheit (20, 22, 24) das Einführen in den Raum durchgeführt wird, so dass es möglich ist, auf Enden des Bereiches (68) und des verbleibenden Teils des zu bearbeitenden Halbzeugs (4) zu arbeiten.

## Revendications

1. Dispositif pour usiner des pièces longitudinales semi-usinées, en particulier des éléments métalliques profilés, comprenant des moyens de support (6) de banc de machine s'étendant dans une direction longitudinale et agencés pour supporter une pièce semi-usinée à usiner dans une position d'usinage, des moyens de stockage (10, 12) agencés pour délivrer des pièces semi-usinées (4) à usiner et/ou pour recevoir des pièces semi-usinées déjà usinées (14), des moyens de déplacement (58, 60, 62, 64, 66) agencés pour avancer lesdites pièces semi-usinées (4, 14) en direction de ladite position d'usinage et/ou les retirer de celle-ci, lesdits moyens de déplacement (58, 60, 62, 64, 66) étant mobiles dans un plan transversal à ladite direction longitudinale pour délivrer la pièce semi-usinée (4) à usiner dans la position d'usinage et/ou retirer la pièce semi-usinée déjà usinée (14) de la position d'usinage, ***caractérisé en ce que*** lesdits moyens de stockage (10, 12) comprennent des premiers moyens de stockage (10) agencés pour stocker lesdites pièces semi-usinées (4) à usiner et s'étendant sur un premier côté desdits moyens de support (6) de banc de machine et des deuxièmes moyens de stockage (12) agencés pour stocker lesdites pièces semi-usinées déjà usinées (14) et s'étendant sur un autre côté desdits moyens de support (6) de banc de machine opposé audit premier côté.

2. Dispositif selon la revendication 1, dans lequel lesdits premiers moyens de stockage (10) et et lesdits deuxièmes moyens de stockage (12) comprennent une pluralité de transporteurs à bande parallèles (16) agencés transversalement par rapport auxdits moyens de support (6) de banc de machine.

3. Dispositif selon la revendication 1 ou 2, dans lequel lesdits moyens de déplacement (58, 60, 62, 64, 66) s'étendent essentiellement au-dessus desdits moyens (6) de banc de machine.

4. Dispositif selon l'une quelconque des revendications précédentes, dans lequel lesdits moyens de déplacement (58, 60, 62, 64, 66) comprennent des moyens de passerelle (58) supportés de manière coulissante dans une direction longitudinale le long de glissières de guidage (54) parallèles auxdits moyens (6) de banc de machine et agencés au-dessus de ceux-ci.

5. Dispositif selon la revendication 4, dans lequel lesdits moyens de passerelle (58) supportent des moyens de pinces (64, 66) via des moyens de chariot (60) couplés de manière coulissante auxdits moyens de passerelle (58).

6. Dispositif selon la revendication 5, dans lequel lesdits moyens de pinces (64, 66) peuvent être déplacés verticalement par rapport auxdits moyens de passerelle (58).

7. Dispositif selon l'une quelconque des revendications précédentes, et comprenant de plus une unité de découpage (18, 18a) supportée sur des patins (19) desdits moyens (6) de banc de machine de manière à être longitudinalement positionnables par rapport auxdits moyens (6) de banc de machine, ladite unité de découpage (18 ; 18a) étant agencée pour découper ladite pièce semi-usinée (4) sur un plan transversal.

8. Dispositif selon l'une quelconque des revendications précédentes, et comprenant de plus au moins une unité de commande (20, 22, 24) supportée sur des patins (19) desdits moyens (6) de banc de machine de manière à être longitudinalement positionnable par rapport auxdits moyens (6) de banc de machine, ladite au moins une unité de commande (20, 22, 24) étant agencée pour réaliser des usinages sur des surfaces de ladite pièce semi-usinée (4).

9. Dispositif selon la revendication 8 en combinaison avec la revendication 7, dans lequel ladite au moins une unité de commande (20, 22, 24) est agencée entre ladite unité de découpage (18; 18a) et l'extrémité desdits moyens (6) de banc de machine.

10. Procédé pour usiner des pièces longitudinales semi-usinées, en particulier des éléments métalliques profilés, comprenant le support d'une pièce semi-usinée (4) à usiner s'étendant essentiellement dans une direction longitudinale dans une position d'usinage, le stockage desdites pièces semi-usinées (4) à usiner et/ou des pièces semi-usinées déjà usinées (14), le déplacement en direction de et/ou hors desdites pièces semi-usinées (4, 14) par rapport à ladite position d'usinage, ledit déplacement comprenant essentiellement le déplacement desdites pièces semi-usinées (4, 14) transversalement à ladite direction longitudinale pour empêcher substantiellement lesdites pièces semi-usinées (4, 14) d'être déplacées le long de ladite direction longitudinale au moins immédiatement avant que lesdites pièces semi-usinées n'atteignent ladite position d'usinage et/ou au moins immédiatement après que lesdites pièces semi-usinées aient été retirées de ladite position d'usinage, ***caractérisé en ce que*** ledit déplacement comprend de plus le chargement desdites pièces semi-usinées (4) à usiner desdits premiers moyens de stockage (10) s'étendant sur un premier côté de ladite position d'usinage et le déchargement desdites pièces semi-usinées déjà usinées (14) dans lesdits deuxièmes moyens de stockage (12) s'étendant sur un autre côté de ladite position d'usinage opposé audit premier côté.

11. Procédé selon la revendication 10, dans lequel ledit déplacement prend place au-dessus desdits moyens (6) de banc de machine.

12. Procédé selon la revendication 10 ou 11, dans lequel ledit déplacement comprend le déplacement desdits éléments profilés (4, 14) dans un plan vertical.

13. Procédé selon l'une quelconque des revendications 10 à 12, dans lequel ledit stockage comprend le positionnement desdites pièces semi-usinées (4, 14) parallèlement auxdits moyens (6) de banc de machine sur un côté de ceux-ci.

14. Procédé selon la revendication 13, dans lequel ledit stockage comprend le positionnement desdites pièces semi-usinées (4) à usiner et desdites pièces semi-usinées déjà usinées (14).

15. Procédé selon l'une quelconque des revendications 10 à 14, et comprenant de plus le découpage de ladite pièce semi-usinée (4) pour séparer de ladite pièce semi-usinée une portion (68) de pièce semi-usinée séparée de la partie restante de ladite pièce semi-usinée (4) et l'obtention d'un écartement entre ladite portion et ladite partie restante.

16. Procédé selon la revendication 15, dans lequel ladite obtention comprend l'éloignement de ladite portion (68) de ladite partie restante de pièce semi-usinée (4) dans une direction longitudinale.

17. Procédé selon la revendication 15 ou 16, dans lequel, après ladite obtention, l'insertion d'au moins une unité de commande (20, 22, 24) dans ledit écartement est réalisée, de telle sorte qu'il est possible d'usiner les extrémités de ladite portion (68) et de ladite partie restante de ladite pièce semi-usinée (4) à usiner.
